# EUROPEAN PATENT APPLICATION

(11) **EP 4 776 631 A1**
(43) Date of publication of application: **15.07.2026**
(21) Application number: 24862107.0
(22) Date of filing: 06.09.2024
(51) Int. Cl.: H04N 21/431

(54) **LIVE STREAMING PAGE DISPLAY METHOD, APPARATUS, DEVICE, AND STORAGE MEDIUM**

(30) Priority: 07.09.2023 CN 202311155440
(71) Applicant: BEIJING YOUZHUJU NETWORK TECHNOLOGY CO. LTD., Beijing 101299 (CN)
(72) Inventor: WANG, Li, Beijing 100028 (CN); DONG, Shihan, Beijing 100028 (CN); XIE, Zhiyao, Beijing 100028 (CN)
(74) Representative: Grünecker Patent- und Rechtsanwälte PartG mbB
(86) International application number: PCT/CN2024/117619
(87) International publication number: WO 2025/051269

(57) **Abstract**

Provided are a method, an apparatus, a device and a storage medium for displaying a live streaming page. The method includes: displaying a live streaming room page corresponding to a first account, wherein the live streaming room page corresponding to the first account includes a live video stream corresponding to the first account and a live video stream corresponding to at least one second account, and a connection relationship is established between the first account and the at least one second account; displaying interaction information corresponding to the second account in the live streaming room page corresponding to the first account, wherein the interaction information corresponding to the second account represents an interaction behavior in a live streaming room corresponding to the second account; displaying an interaction page corresponding to the interaction information in the live streaming room page corresponding to the first account in response to a trigger operation for the interaction information. The operation of the object in the live streaming room corresponding to the second account is completed in the live streaming room corresponding to the first account, the path of the operation on the object is shortened, and the flow conversion efficiency is improved.

## Description

This application claims the benefit of Chinese Patent Application No. 202311155440.X, entitled "Method, Apparatus, Device and Storage Medium for Displaying Live Streaming Page", filed September 7, 2023, the entire content of which is incorporated herein by reference.

### FIELD

Embodiments of the disclosure relate to a live streaming technology, in particular to a method, an apparatus, a device and a storage medium for displaying a live streaming page.

### BACKGROUND

Network live streaming is a form of information transfer through the Internet, through which a viewer can intuitively feel live streaming content. Through the interaction between the viewer and a live streamer, fun and vitality of live streaming are improved.

With the development of network live streaming technology, a manner in which the network live streaming and e-commerce are combined occurs, and the live streamer displays a picture link corresponding to a product that the live streamer wants to display to the viewer in his or her live streaming room. If a viewer encounters a product of interest while watching the live streaming, an ordering page may be displayed by clicking the picture link corresponding to the product in the live streaming room. In order to attract more viewers to watch the live streaming, one live streamer may be connected to another live streamer. However, the viewers of the current live streaming room in a connected mode may not place an order in the live streaming room of the other live streaming room because of not trusting the live streamer of the other live streaming room, thereby affecting the traffic conversion efficiency.

### SUMMARY

The invention provides a method, an apparatus, a device and a storage medium for displaying a live streaming page, and can solve the problem of flow conversion efficiency.

According to a first aspect, an embodiment of the present disclosure provides a method for displaying a live streaming room page, including: displaying a live streaming page corresponding to a first account, where the live streaming room page corresponding to the first account includes a live video stream corresponding to the first account and a live video stream corresponding to at least one second account, and a connection relationship is established between the first account and the at least one second account; displaying interaction information corresponding to the second account in the live streaming room page corresponding to the first account, where the interaction information corresponding to the second account represents an interaction behavior in a live streaming room corresponding to the second account; and displaying an interaction page corresponding to the interaction information in the live streaming room page corresponding to the first account in response to a trigger operation for the interaction information.

According to a second aspect, an embodiment of the present disclosure further provides an apparatus for displaying a live streaming page , including: a live streaming room page display module configured to display a live streaming room page corresponding to a first account, where the live streaming room page corresponding to the first account comprises a live video stream corresponding to the first account and a live video stream corresponding to at least one second account, and a connection relationship is established between the first account and the at least one second account; an interaction information display module configured to display interaction information corresponding to the second account in the live streaming room page corresponding to the first account, where the interaction information corresponding to the second account represents an interaction behavior in a live streaming room corresponding to the second account; and an interaction page display module configured to display an interaction page corresponding to the interaction information in the live streaming room page corresponding to the first account in response to a trigger operation for the interaction information.

In a third aspect, an embodiment of the present disclosure further provides an electronic device, including: one or more processors; and a memory for storing one or more programs, where when the one or more programs are executed by the one or more processors, the one or more processors implement the method for displaying a live streaming page according to any embodiment of the present disclosure.

According to a fourth aspect, an embodiment of the present disclosure further provides a storage medium including computer executable instructions, wherein the computer-executable instructions, when executed by a computer processor, execute the method for displaying a live streaming page according to any embodiment of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numerals denote same or similar elements. It should be understood that the drawings are schematic, and elements and elements are not necessarily drawn to scale.
FIG. 1 is a schematic flowchart of a method for displaying a live streaming page according to an embodiment of the present disclosure;
FIG. 2 is a schematic diagram of a live streaming room page according to an embodiment of the present disclosure;
FIG. 3 is a schematic flowchart of another method for displaying a live streaming page according to an embodiment of the present disclosure;
FIG. 4 is a page schematic diagram displaying an object recommendation control in a second display area according to an embodiment of the present disclosure;
FIG. 5 is a schematic flowchart of still another method for displaying a live streaming page according to an embodiment of the present disclosure;
FIG. 6 is a page schematic diagram displaying an account display control in the second display area according to an embodiment of the present disclosure;
FIG. 7 is a schematic flowchart of still another method for displaying a live streaming page according to an embodiment of the present disclosure;
FIG. 8 is a page schematic diagram displaying an object display control in the second display area according to an embodiment of the present disclosure;
FIG. 9 is a schematic flowchart of still another method for displaying a live streaming page according to an embodiment of the present disclosure;
FIG. 10 is a page schematic diagram displaying a preset resource identifier in the second display area according to an embodiment of the present disclosure;
FIG. 11 is another page schematic diagram displaying a preset resource identifier in the second display area according to an embodiment of the present disclosure;
FIG. 12 is a schematic diagram showing that a resource acquisition page is switched to an object list page in the second display area according to an embodiment of the present disclosure;
FIG. 13 is a schematic flowchart of still another method for displaying a live streaming page according to an embodiment of the present disclosure;
FIG. 14 is a structural schematic diagram of an apparatus for displaying a live streaming page according to an embodiment of the present disclosure; and
FIG. 15 is a structural schematic diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, but rather, these embodiments are provided for a more thorough and complete understanding of the disclosure. It should be understood that the drawings and embodiments of the present disclosure are for exemplary purposes only and are not intended to limit the scope of the present disclosure.

It should be understood that the steps recited in embodiments of the method of the present disclosure may be performed in different orders, and/or in parallel. Further, the method embodiments may include additional steps and/or omit performing the illustrated steps. The scope of the present disclosure is not limited in this respect.

As used herein, the term "include", "comprise" and variations thereof are open-ended, i.e., "including but not limited to". The term "based on" is "based at least in part on". The term "one embodiment" means "at least one embodiment"; the term "another embodiment" means "at least one further embodiment"; the term "some embodiments" means "at least some embodiments". The relevant definitions of other terms will be given in the description below.

It should be noted that the concepts of "first", "second" and the like mentioned in this disclosure are merely used to distinguish different apparatuses, modules, or units, and are not intended to limit the order of functions performed by the apparatuses, modules, or units or the mutual dependency relations.

It should be noted that the modifications of "a" and "a plurality" mentioned in this disclosure is illustrative and not limiting, and those skilled in the art should understand that it should be understood as "one or more" unless the context clearly indicates otherwise.

The names of messages or information interacted among multiple apparatuses in embodiments of the present disclosure are for illustrative purposes only and are not intended to limit the scope of such messages or information.

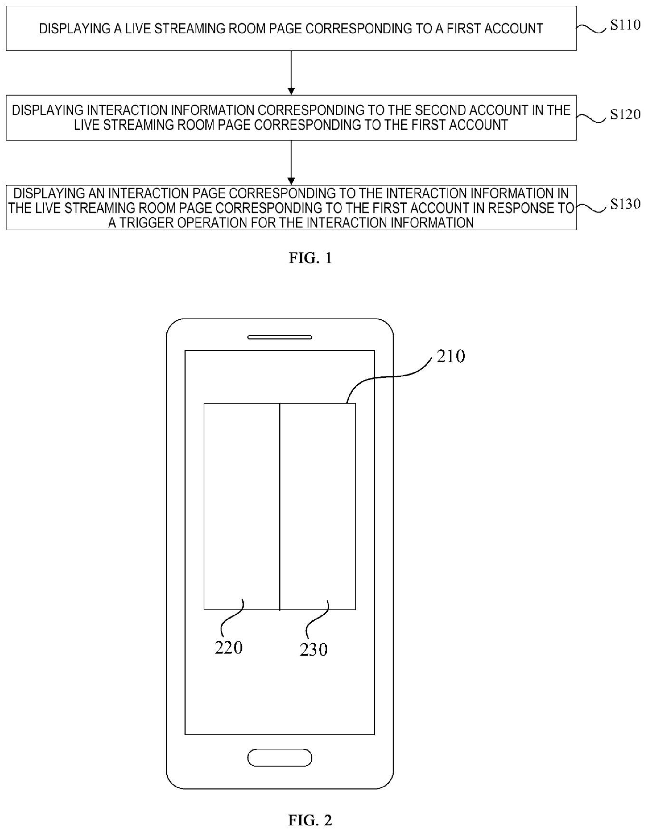

FIG. 1 is a schematic flowchart of a method for displaying a live streaming page according to an embodiment of the present disclosure. The embodiments of the present disclosure are applicable to the case of live streaming connection of e-commerce merchants. The method may be performed by an apparatus for displaying a live streaming page. The apparatus may be implemented in the form of software and/or hardware, and optionally, be implemented by an electronic device, which may be a mobile terminal or a PC terminal, or the like.

As shown in FIG. 1, the method includes the following steps.

In S110, a live streaming room page corresponding to a first account is displaying.

The live streaming room page corresponding to the first account includes a live video stream corresponding to the first account and a live video stream corresponding to at least one second account, and a connection relationship is established between the first account and the at least one second account. The connection relationship represents a relationship between different accounts that can share a live video stream to each other. For example, the live video stream corresponding to the first account may be pushed to the live streaming room corresponding to the at least one second account through a server, and the live video stream corresponding to each second account may be pushed to the live streaming room corresponding to the first account through the server.

The live streaming room described in the embodiments of the present disclosure refers to a network chat room with an audio/video playback and control function implemented by means of the Internet technology, includes a live streamer and viewers, and interaction between the live streamer and the viewers may be achieved through voice, videos, texts and other online interaction manners.

In the embodiments of the present disclosure, the live streaming room page of the first account may be a client display page of the viewers entering the live streaming room of the first account. After the connection relationship is established between the first account and the at least one second account, the live streaming video stream corresponding to the first account and the live video stream corresponding to the at least one second account are displayed on the live streaming room page of the first account.

The live streaming room page corresponding to the first account includes a first display area and at least one second display area. The live video stream corresponding to the first account is displayed in the first display area, and the live video stream corresponding to each second account is respectively displayed in respective second display area. Because the live streaming room page corresponding to the first account needs to display a plurality of live video streams, an original display area of the live video stream of the live streaming room corresponding to the first account needs to be scaled to obtain the first display area and the at least one second display area. FIG. 2 is a schematic diagram of a live streaming room page according to an embodiment of the present disclosure. As shown in FIG. 2, after the original display area 210 of the live video stream of the live streaming room corresponding to the first account is scaled in an uniform manner, the first display area 220 and the second display area 230 are obtained, widths of the first display area 220 and the second display area 230 are each half of the width of the original display area 210, and heights of the first display area 220 and the second display area 230 are each equal to the height of the original display area 210.

It should be noted that, if there are n live streaming rooms corresponding to the second accounts, the original display area of the live video stream of the live streaming room corresponding to the first account may be equally divided into n+1 sub-areas, and the live video streams corresponding to the first account and the at least one second account are displayed through the sub-areas, respectively. Alternatively, the original display area of the live video stream of the live streaming room corresponding to the first account may be equally divided into 2 sub-areas, the live video stream corresponding to the first account is displayed in one sub-area, the other sub-area is equally divided into n small areas, and the live video stream corresponding to each second account is displayed in respective small area. The division manner of the display area of the live video stream is not specifically limited in the present disclosure.

In S120, interaction information corresponding to the second account is displayed in the live streaming room page corresponding to the first account.

The interaction information corresponding to the second account represents an interaction behavior in the live streaming room corresponding to the second account. In the embodiments of the present disclosure, the interaction information may include one or more of a preset resource identifier, an object recommendation control, an account display control, and an object display control. For example, the preset resource identifier may represent marketing preference information such as a coupon or a red packet in the live streaming room corresponding to the second account. The object recommendation control may represent the object recommendation information in the live streaming room corresponding to the second account. The account display control may represent information about a live streamer in the live streaming room corresponding to the second account. The object display control may represent object list information in the live streaming room corresponding to the second account.

For example, the interaction information corresponding to the second accounts is respectively displayed at the display position in respective second display areas in the live streaming room page corresponding to the first account, where the display position is a background area in the second display area. In the embodiments of the present disclosure, the background area is generally a non-critical area in the second display area, for example, the background area may be an area in the second display area that does not form an occlusion on the face of the live streamer and/or the object being introduced.

In some embodiments, for each second account, there is a corresponding second display area in the live streaming room corresponding to the first account, and it may be necessary to display, in the second display area, one piece of interaction information corresponding to the second account; alternatively, at least two types of interaction information corresponding to the second account may also need to be displayed in the second display area.

For example, in respective second display area in the live streaming room corresponding to the first account, one piece of interaction information corresponding to each second account is respectively displayed; alternatively, in respective second display area in the live streaming room corresponding to the first account, at least two types of interaction information corresponding to at least one second account are respectively displayed; alternatively, in part of the second display areas in the live streaming room corresponding to the first account, one piece of interaction information corresponding to the second account that needs to display one piece of interaction information is respectively displayed, and at least two types of interaction information corresponding to the second account that need to display at least two types of interaction information are respectively displayed in the part of the second display area.

Optionally, for each second account, if the interaction information corresponding to the second account is displayed, the one piece of interaction information corresponding to the second account is displayed in the display position in the second display area in the live streaming room page corresponding to the first account.

Optionally, for each second account, if at least two types of interaction information corresponding to the second account are displayed, a display order is determined according to types of the at least two types of interaction information of the second account; and according to the display order, the at least two types of interaction information corresponding to the second account are displayed in a display position in the second display area in the live streaming room page corresponding to the first account.

The determining the display order according to the types of the at least two types of interaction information of the second account may include: determining a display order according to the types of the at least two types of interaction information of the second account and a preset display policy, where the preset display policy represents display rules such as display priorities and display time of different types of the interaction information corresponding to the second account.

For each second account, if the object recommendation control and the preset resource identifier need to be displayed at the bottom of the second display area, the display order may be determined according to a preset display policy to preferentially display the preset resource identifier, and after the preset resource identifier disappears, the object recommendation control is displayed. Alternatively, if the object recommendation control and the account display control need to be displayed at the bottom of the second display area, the display order may be determined according to the preset display policy to preferentially display the object recommendation control, and after the object recommendation control disappears, the account display control is displayed. Alternatively, if the object recommendation control and the object display control need to be displayed at the bottom of the second display area, the display order may be determined according to the preset display policy to preferentially display the object recommendation control, and after the object recommendation control disappears, the object display control is displayed. Alternatively, if the account display control and the object display control need to be displayed at the bottom of the second display area, the display order may be determined according to the preset display policy to display the account display control and the object display control in turn.

In S130, an interaction page corresponding to the interaction information is displayed in the live streaming room page corresponding to the first account in response to a trigger operation for the interaction information.

The triggering operation of the interaction information may be an operation on the interaction information corresponding to the second account in the second display area. For example, the triggering operation of the interaction information may be a click operation, a voice instruction, or a gaze action on the interaction information corresponding to the second account in the second display area.

The interaction page may be a page that needs to be displayed after the interaction information corresponding to the second account in the second display area is triggered. For example, the interaction page may include a resource acquisition page, an object list page, an object details page, an object submission page, an account information page, or the like.

For example, in response to the click operation on the preset resource identifier corresponding to the second account in the second display area, the resource acquisition page is displayed in the live streaming room page corresponding to the first account.

Optionally, in response to the click operation on the object recommendation control corresponding to the second account in the second display area, the object details page is displayed in the live streaming room page corresponding to the first account. Then, in response to an object specification selection operation of the object details page, the object submission page is displayed in the live streaming room page corresponding to the first account.

Optionally, in response to the click operation on the object recommendation control corresponding to the second account in the second display area, the object submission page is directly displayed in the live streaming room page corresponding to the first account.

Optionally, in response to the click operation on the account display control corresponding to the second account in the second display area, the account information page is displayed in the live streaming room page corresponding to the first account.

Optionally, in response to the click operation on the object display control corresponding to the second account in the second display area, the object list page is displayed in the live streaming room page corresponding to the first account.

According to the embodiments of the present disclosure, the interaction information corresponding to the at least one second account is displayed in the live streaming room page corresponding to the first account, the interaction page corresponding to the interaction information is displayed in the live streaming room page corresponding to the first account in response to the triggering operation of the interaction information, and displaying the interaction information corresponding to the second account in the live streaming room page corresponding to the first account is achieved, so that the interaction information corresponding to the second account may be operated in the live streaming room corresponding to the first account, generating the effect similar to operating the interaction information directly in the live streaming room corresponding to the second account, thereby increasing the user experience and satisfaction of the viewers of the live streaming room corresponding to the first account, enabling an operation on the object in the live streaming room corresponding to the second account to be directly completed in the live streaming room corresponding to the first account, shortening the path of the object operation, and improving the flow conversion efficiency.

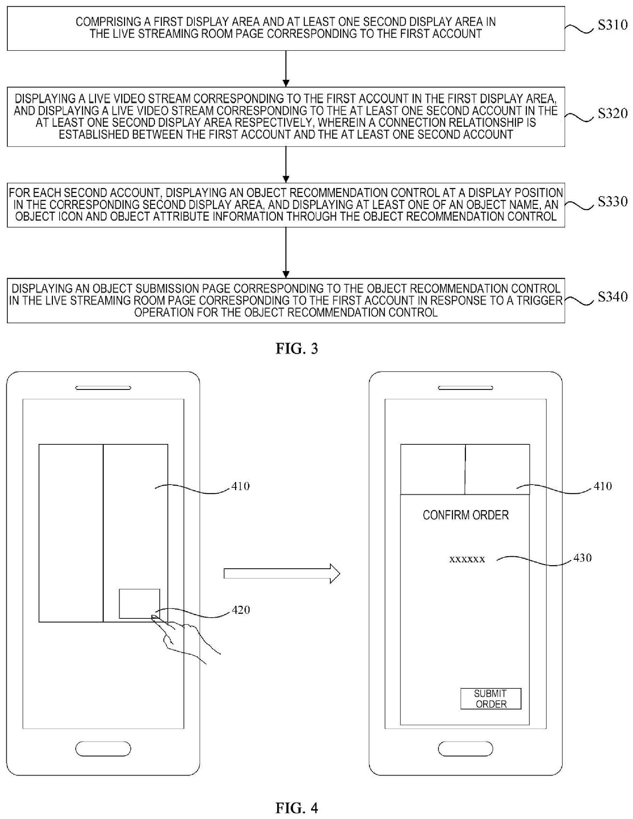

FIG. 3 is a schematic flowchart of another method for displaying a live streaming page according to an embodiment of the present disclosure. On the basis of the above embodiments, in case that the interaction information is the object recommendation control displayed in the second display area, the steps of displaying the object recommendation control corresponding to the second account in the live room page corresponding to the first account, and in response to the triggering operation of the object recommendation control, displaying the interaction page corresponding to the object recommendation control are specifically defined. As shown in FIG. 3, the method includes the following steps.

In S310, the live streaming room page corresponding to the first account includes a first display area and at least one second display area.

In S320, a live video stream corresponding to the first account is displayed in the first display area, and a live video stream corresponding to at least on second account in respective second display area is respectively displayed, where a connection relationship is established between the first account and the at least one second account.

In S330, for each second account, an object recommendation control is displayed at a display position in a corresponding second display area, and at least one of an object name, an object icon, and object attribute information is displayed through the object recommendation control.

The object attribute information may include an object exchange value, an object remaining number, and the like.

It should be noted that the object recommendation control disappears after being displayed for a set time.

In S340, an object submission page corresponding to the object recommendation control is displayed in the live streaming room page corresponding to the first account in response to a trigger operation for the object recommendation control.

The trigger operation for the object recommendation control may be a click operation, a voice instruction, or a gaze action on the object recommendation control displayed in the second display area.

Alternatively, in response to the trigger operation for the object recommendation control, an object details page corresponding to the object recommendation control is displayed in the live streaming room page corresponding to the first account. The object submission page is displayed in the live streaming room page corresponding to the first account in response to an object specification selection operation in the object details page.

FIG. 4 is a page schematic diagram of displaying an object recommendation control in a second display area according to an embodiment of the present disclosure. As shown in FIG. 4, the object recommendation control 420 is displayed at the bottom of the second display area 410 in the live streaming room page corresponding to the first account. A product name, a product price, and a product inventory are displayed on the object recommendation control 420. Alternatively, the object recommendation control 420 includes a product name and a product icon. In response to the click operation on the object recommendation control 420, the object submission page 430 may be displayed in the live streaming room page corresponding to the first account.

According to the technical scheme of embodiments of the present disclosure, the object recommendation control corresponding to the second account is directly displayed in the second display area in the live streaming room page corresponding to the first account. The object submission page corresponding to the object recommendation control is displayed through the triggering operation on the object recommendation control. The related operation on the object in the live streaming room corresponding to the second account is realized through the object submission page, without jumping to the live streaming room corresponding to the second account to perform operation on the object, and the path of the operation on the object is shortened.

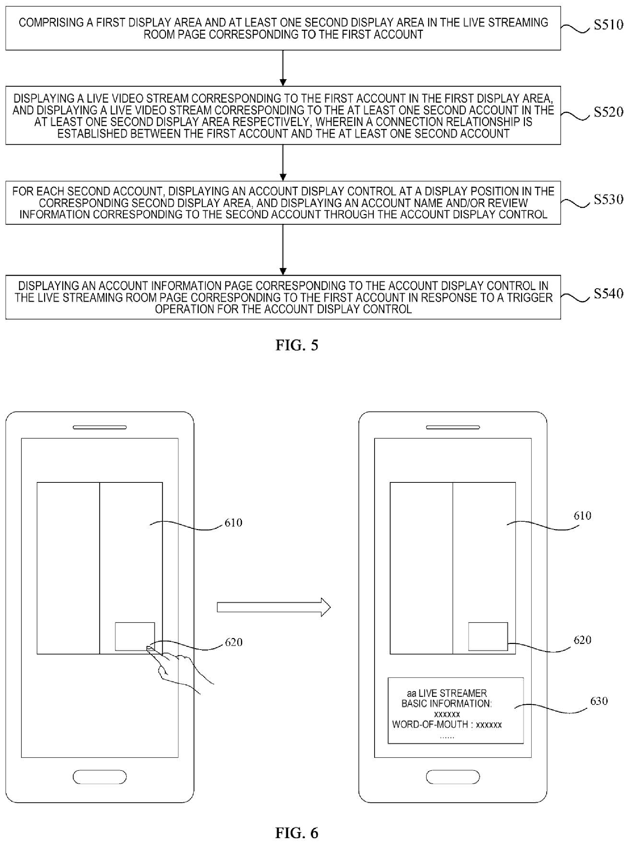

FIG. 5 is a schematic flowchart of still another method for displaying a live streaming page according to an embodiment of the present disclosure. On the basis of the above embodiments, in case that the interaction information is an account display control displayed in the second display area, the step of displaying an account display control corresponding to the second account in the live room page corresponding to the first account, and in response to a triggering operation of the account display control, displaying an account information page corresponding to the account display control is specifically defined. As shown in FIG. 5, the method includes the following steps.

In S510, the live streaming room page corresponding to the first account includes a first display area and at least one second display area.

In S520, a live video stream corresponding to the first account is displayed in the first display area, and a live video stream corresponding to at least one second account is respectively displayed in respective second display area, where a connection relationship is established between the first account and at least one second account.

In S530, for each second account, an account display control is displayed at a display position in the corresponding second display area, and an account name and/or review information corresponding to the second account is displayed through the account display control.

The account name may include a name, a nickname, and the like of the live streamer of the live streaming room corresponding to the second account. The review information may include a product selling word-of-mouth, a product selling ability, and a title of the live streamer of the live streaming room corresponding to the second account.

For example, the account name and the review information are simultaneously displayed through the account display control in the second display area.

In some embodiments, the account name or the review information is displayed in turn through the account display control in the second display area.

In S540, an account information page corresponding to the account display control is displayed in the live streaming room page corresponding to the first account in response to a trigger operation for the account display control.

The trigger operation for the account display control may be a click operation, a voice instruction, or a gaze action on the account display control displayed in the second display area.

The account information page represents basic information and review information of the live streamer of the live streaming room corresponding to the second account. For example, the account information page may be a data card of the live streamer of the live streaming room corresponding to the second account.

FIG. 6 is a page schematic diagram of displaying an account display control in a second display area according to an embodiment of the present disclosure. As shown in FIG. 6, the account display control 620 is displayed at the bottom of the second display area 610 in the live streaming room page corresponding to the first account, and the account name and the review information are displayed on the account display control 620. Alternatively, the account name or the review information is displayed on the account display control 620 in turn. In response to a click operation on the account display control 620, an account information page 630 may be displayed in the live streaming room page corresponding to the first account.

According to the technical scheme of embodiments of the present disclosure, the account display control is directly displayed through the second display area in the live streaming room page corresponding to the first account, and the account information page is displayed through the triggering operation on the account display control, thereby realizing that the related information of the live streamer of the live streaming room corresponding to the second account is queried in the live streaming room page corresponding to the first account, improving the user experience and satisfaction of the viewers in the live streaming room corresponding to the first account, and further improving the flow conversion efficiency.

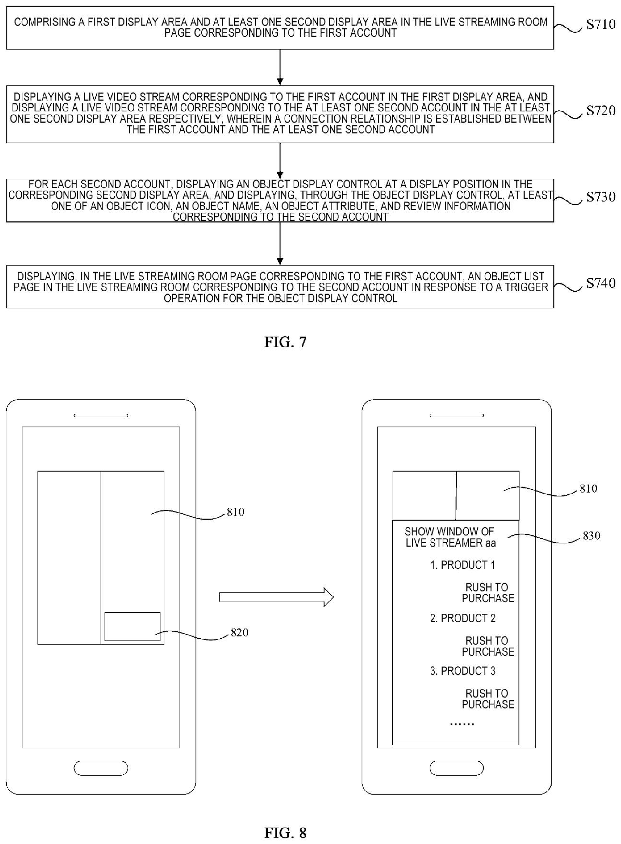

FIG. 7 is a schematic flowchart of still another method for displaying a live streaming page according to an embodiment of the present disclosure. On the basis of the above embodiments, in case that the interaction information is an object display control displayed in the second display area, the step of displaying the object display control corresponding to the second account in the live room page corresponding to the first account, and in response to a triggering operation of the object display control, displaying the object list page corresponding to the object display control is specifically defined. As shown in FIG. 7, the method includes the following steps.

In S710, the live streaming room page corresponding to the first account includes a first display area and at least one second display area.

In S720, a live video stream corresponding to the first account is displayed in the first display area, and a live video stream corresponding to at least one second account is respectively displayed in respective second display area, where a connection relationship is established between the first account and at least one second account.

In S730, for each second account, an object display control is displayed at a display position in the corresponding second display area, and at least one of an object icon, an object name, an object attribute, and review information corresponding to the second account is displayed through the object display control.

The object attribute may include an object exchange value, an object remaining number, and the like. The review information may include a product selling word-of-mouth, a product selling ability, and a title of the live streamer of the live streaming room corresponding to the second account.

For example, the object icon is displayed on the object display control. Alternatively, the object icon, the object name, and the object attribute are displayed on the object display control. Alternatively, the object icon and the object name are displayed on the object display control. Alternatively, the object icon and the review information are displayed on the object display control.

In S740, an object list page in the live streaming room corresponding to the second account is displayed in the live streaming room page corresponding to the first account in response to a trigger operation for the object display control.

The trigger operation for the object display control may be a click operation, a voice instruction, or a gaze action on the object display control displayed in the second display area.

The object list page may be an information table of a target object in the live streaming room corresponding to the second account, and the target object in the live streaming room corresponding to the second account may be directly operated through the object list page.

FIG. 8 is a page schematic diagram displaying a object display control in the second display area according to an embodiment of the present disclosure. As shown in FIG. 8, the object display control 820 is displayed at the bottom of the second display area 810 in the live streaming room page corresponding to the first account. The object display control 820 includes a shopping cart identifier. Alternatively, the object display control 820 includes a shopping cart identifier, a product name, a product price, and a product inventory. Alternatively, the object display control 820 includes a shopping cart identifier and a product name. Alternatively, the object display control 820 includes a shopping cart identifier and review information of the live streamer in the live streaming room corresponding to the second account. In response to a click operation on the object display control 820, the product list page 830 may be displayed in the live streaming room page corresponding to the first account.

According to the technical scheme of embodiments of the present disclosure, the object display control of the live streaming room corresponding to the second account is directly displayed through the second display area in the live streaming room page corresponding to the first account. The object list page of the live streaming room corresponding to the second account may be displayed in the live streaming room page corresponding to the first account through the trigger operation for the object display control, without jumping to the live streaming room corresponding to the second account to perform operation on the object, thereby shortening the path of the operation on the object, and improving the flow conversion efficiency.

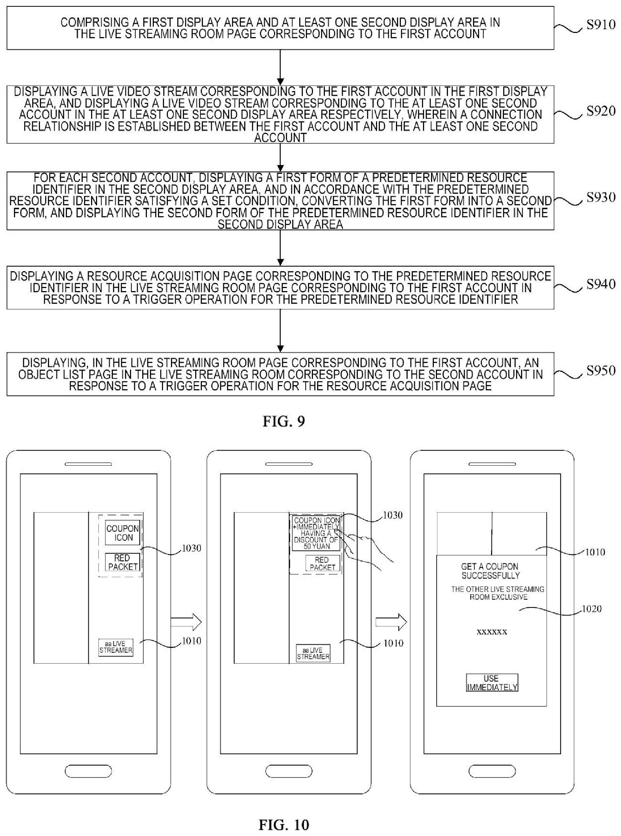

FIG. 9 is a schematic flowchart of still another method for displaying a live streaming page according to an embodiment of the present disclosure. On the basis of the above embodiments, in case that the interaction information is the preset resource identifier displayed in the second display area, the step of displaying the preset resource identifier in the live room page corresponding to the first account, and in response to a triggering operation of the preset resource identifier, displaying the resource acquisition page corresponding to the preset resource identifier is specifically defined. As shown in FIG. 9, the method includes the following steps.

In S910, the live streaming room page corresponding to the first account includes a first display area and at least one second display area.

In S920, a live video stream corresponding to the first account is displayed in the first display area, and a live video stream corresponding to at least one second account is respectively displayed in respective second display area, where a connection relationship is established between the first account and at least one second account.

In S930, for each second account, a first form of the preset resource identifier is displayed in the second display area, and when the preset resource identifier satisfies a set condition, the first form is converted into a second form, and a second form of the preset resource identifier is displayed in the second display area.

The first form and the second form are at least one element in a form set, the first form is different from the second form, and the form set includes a resource icon and a resource attribute. For example, the first form of the preset resource identifier is that the preset resource identifier includes a resource icon. The second form of the preset resource identifier is that the preset resource identifier includes a resource icon and a resource attribute. The resource attribute represents the number of resources obtained by the viewers in the live streaming room corresponding to the second account. For example, the resource attribute may include a limit of a coupon or a limit of a red packet.

For example, the preset resource identifier displays a background area of the second display area in the live streaming room page corresponding to the first account in the first form, and slides at a set position in the background area. The preset resource identifier is static after reaching the set position and is converted from the first form to the second form, and the resource icon and the resource attribute are displayed in the second form.

Optionally, the preset resource identifier displays the background area of the second display area in the live streaming room page corresponding to the first account in the second form, and after the preset resource identifier displays the set time in the second form, the preset resource identifier is converted from the second form to the first form, and the display resource icon is displayed in the first form.

In S940, a resource acquisition page corresponding to the preset resource identifier is displayed in the live streaming room page corresponding to the first account in response to a trigger operation for the preset resource identifier.

The trigger operation for the preset resource identifier may be a click operation, a voice instruction, or a gaze action on the preset resource identifier displayed in the second display area.

FIG. 10 is a page schematic diagram displaying a preset resource identifier in a second display area according to an embodiment of the present disclosure. As shown in FIG. 10, the preset resource identifier 1030 in the first form is displayed on the upper right of the second display area 1010 in the live streaming room page corresponding to the first account, and the preset resource identifier 1030 in the first form slides towards the center of the second display area 1010 until the preset resource identifier 1030 slides to the set position to be static. After being static, the preset resource identifier 1030 is converted from the first form to the second form, and the resource icon and the resource attribute are displayed in the second form. In response to a click operation on the preset resource identifier 1030, the resource acquisition page 1020 may be displayed in the live streaming room page corresponding to the first account.

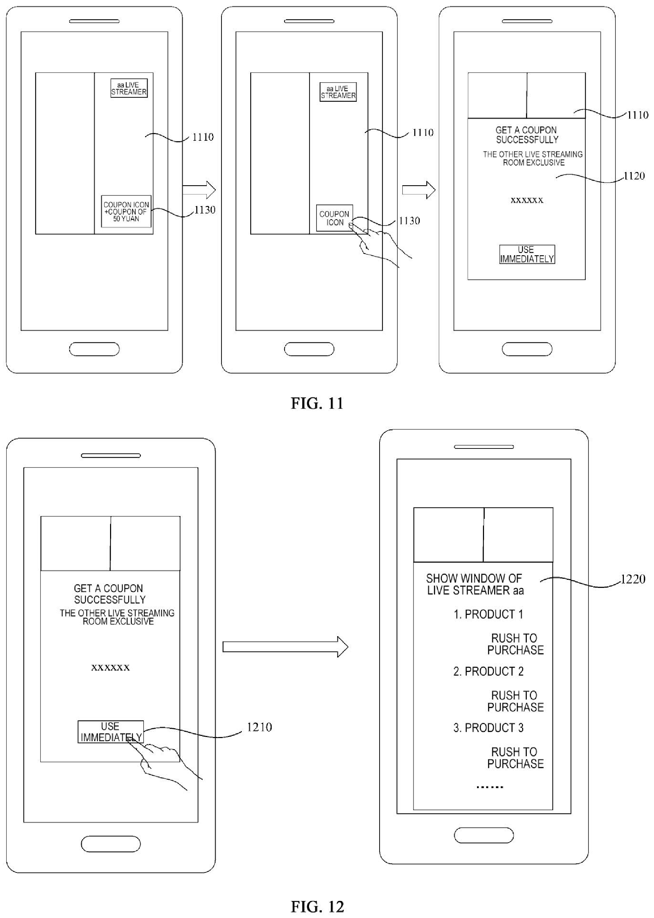

FIG. 11 is another page schematic diagram displaying a preset resource identifier in a second display area according to an embodiment of the present disclosure. As shown in FIG. 11, the preset resource identifier 1130 in the second form is displayed at the bottom of the second display area 1110 in the live streaming room page corresponding to the first account, and the resource icon and the resource attribute are displayed in the second form. After the preset resource identifier 1130 in the second form displays for a set time, the preset resource identifier 1130 is converted from the second form to the first form, and the resource icon is displayed through the preset resource identifier 1130 in the first form. In response to a click operation on the preset resource identifier 1130, the resource acquisition page 1120 may be displayed in the live streaming room page corresponding to the first account.

In S950, an object list page in the live streaming room corresponding to the second account is displayed in the live streaming room page corresponding to the first account in response to a trigger operation for the resource acquisition page.

The trigger operation for the resource acquisition page may be an operation on a set use control in the resource acquisition page. For example, the trigger operation may be a click operation, a voice instruction, or a gaze action on the set use control.

FIG. 12 is a schematic diagram showing that a resource acquisition page is switched to an object list page in the second display area according to an embodiment of the present disclosure. As shown in FIG. 12, after an immediate use button 1210 in the resource acquisition page is clicked, the object list page 1220 of the live streaming room corresponding to the second account is displayed.

According to the technical scheme of the embodiment of the present disclosure, the preset resource identifier of the live streaming room corresponding to the second account is displayed in the second display area in the live streaming room page corresponding to the first account. Obtaining the setting resource of the live streaming room corresponding to the second account in the live streaming room corresponding to the first account is realized through the trigger operation for the preset resource identifier, and the related information of the set resource is displayed through the resource acquisition page. Then, the object list page of the live streaming room corresponding to the second account is displayed in the live streaming room page corresponding to the first account through the trigger operation for the resource acquisition page, without jumping to the live streaming room page corresponding to the second account to perform operation on an object, thereby shortening the path of the operation on the object, and improving the flow conversion efficiency.

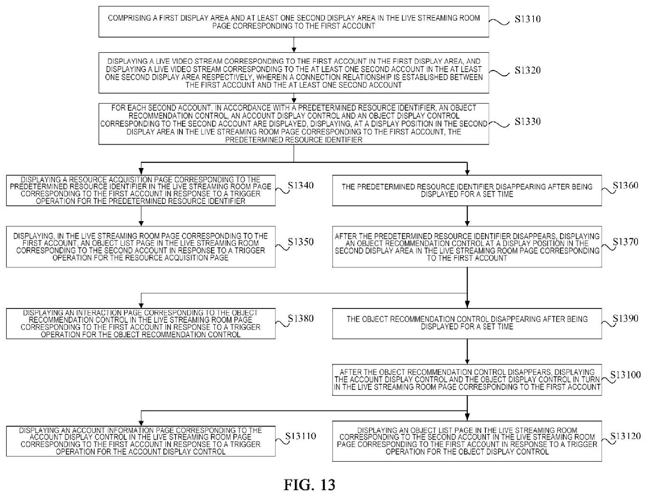

FIG. 13 is a schematic flowchart of still another method for displaying a live streaming page according to an embodiment of the present disclosure. On the basis of the above embodiments, displaying four pieces of interaction information of a preset resource identifier, an object recommendation control, an account display control and an object display control corresponding to the second account in the second showing area are additionally defined. As shown in FIG. 13, the method includes the following steps.

In S1310, the live streaming room page corresponding to the first account includes a first display area and at least one second display area.

In S1320, a live video stream corresponding to the first account is displayed in the first display area, and a live video stream corresponding to at least one second account is respectively displayed in respective second display area, where a connection relationship is established between the first account and at least one second account.

In S1330, for each second account, if the preset resource identifier, the object recommendation control, the account display control, and the object display control corresponding to the second account are displayed, the preset resource identifier is displayed at the display position in the second display area in the live streaming room page corresponding to the first account.

In S1340, a resource acquisition page corresponding to the preset resource identifier is displayed in the live streaming room page corresponding to the first account in response to a trigger operation for the preset resource identifier.

In S1350, an object list page in the live streaming room corresponding to the second account is displayed in the live streaming room page corresponding to the first account in response to a trigger operation for the resource acquisition page.

In S1360, the preset resource identifier disappears after being displayed for a set time.

In S1370, after the preset resource identifier disappears, an object recommendation control is displayed at a display position in the second display area in the live streaming room page corresponding to the first account.

In S1380, an interaction page corresponding to the object recommendation control is displayed in the live streaming room page corresponding to the first account in response to a trigger operation for the object recommendation control.

In S1390, the object recommendation control disappears after being displayed for a set time.

In S13100, after the object recommendation control disappears, the account display control and the object display control are displayed in turn in the live streaming room page corresponding to the first account.

In S13110, an account information page corresponding to the account display control is displayed in the live streaming room page corresponding to the first account in response to a trigger operation for the account display control.

In S13120, an object list page in the live streaming room corresponding to the second account is displayed in the live streaming room page corresponding to the first account in response to a trigger operation for the object display control.

According to the technical scheme of embodiments of the disclosure, the display order is determined according to types of the at least two types of interaction information of the second account, and then according to the display order, at least two types of interaction information corresponding to the second account are displayed at the display position in the second display area in the live streaming room page corresponding to the first account, so as to avoid conflicts of the display position of the interaction information.

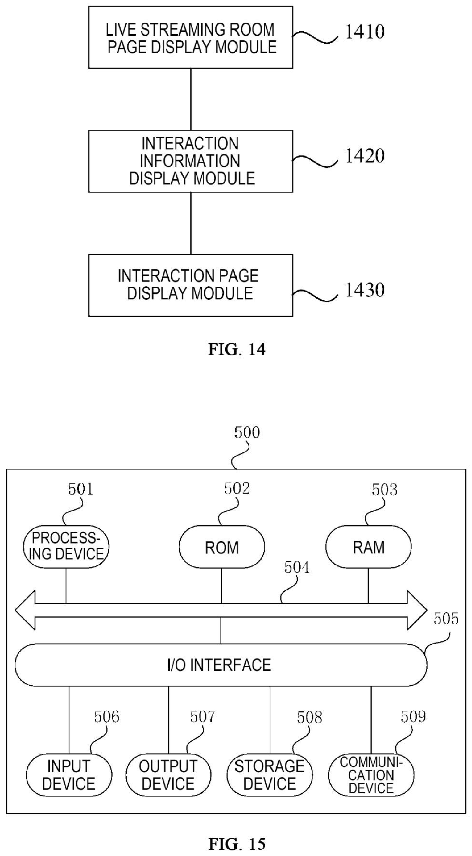

FIG. 14 is a structural schematic diagram of an apparatus for displaying a live streaming page according to an embodiment of the present disclosure. The apparatus may perform the method for displaying a live page according to any embodiment of the present disclosure, and the apparatus may be implemented in software and/or hardware. As shown in FIG. 14, the apparatus includes: a live streaming room page display module 1410, an interaction information display module 1420, and an interaction page display module 1430.

The live streaming room page display module 1410 is configured to display the live streaming room page corresponding to the first account, where he live streaming room page corresponding to the first account includes a live video stream corresponding to the first account and a live video stream corresponding to at least one second account, and a connection relationship is established between the first account and the at least one second account. The interaction information display module 1420 is configured to display, on the live streaming room page corresponding to the first account, interaction information corresponding to the second account, where the interaction information corresponding to the second account represents an interaction behavior in the live streaming room corresponding to the second account. The interaction page display module 1430 is configured to display, in response to the trigger operation for the interaction information, an interaction page corresponding to the interaction information in the live streaming room page corresponding to the first account.

Optionally, the live streaming room page display module 1410 is specifically configured to: include a first display area and at least one second display area in the live streaming room page corresponding to the first account; and display, in the first display area, a live video stream corresponding to the first account, and respectively display, in respective second display area, a live video stream corresponding to at least one second account.

Optionally, the interaction information display module 1420 is specifically configured to: respectively display the interaction information corresponding to at least one second account at a display position in respective second display area in the live streaming room page corresponding to the first account, where the display position is a background area in the second display area.

Further, the interaction information display module 1420 is further configured to: for each second account, display, in the display position in the second display area in the live streaming room page corresponding to the first account, the interaction information corresponding to the second account if a piece of interaction information corresponding to the second account is displayed.

Further, the interaction information display module 1420 is further specifically configured to: for each second account, determine a display order according to types of the at least two types of interaction information of the second account if the at least two types of interaction information corresponding to the second account are displayed; and display, according to the display order, the at least two types of interaction information corresponding to the second account in the display position in the second display area in the live streaming room page corresponding to the first account.

Optionally, the interaction page display module 1430 is specifically configured to: display, in the live streaming room page corresponding to the first account, a resource acquisition page corresponding to the preset resource identifier in response to a trigger operation for the preset resource identifier when the interaction information is the preset resource identifier displayed in the second display area.

Optionally, the apparatus further includes: a resource acquisition page triggering module configured to, after displaying the resource acquisition page corresponding to the preset resource identifier in the live streaming room page corresponding to the first account, display, in a live streaming room page corresponding to the first account, an object list page in the live streaming room corresponding to the second account in response to a trigger operation for the resource acquisition page.

Optionally, displaying the preset resource identifier in the second display area includes: displaying, in the second display area, a first form of the preset resource identifier, when the preset resource identifier satisfies a set condition, converting the first form into a second form, and displaying, in the second display area, the second form of the preset resource identifier where the first form and the second form are at least one element in a form set, the first form is different from the second form, and the form set includes a resource icon and a resource attribute.

Optionally, the interaction page display module 1430 is further specifically configured to: display, through an object recommendation control, at least one of an object name, an object icon, and object attribute information when the interaction information is an object recommendation control displayed in the second display area; and display, in the live streaming room page corresponding to the first account, an interaction page corresponding to the object recommendation control in response to a trigger operation for the object recommendation control, where the interaction page includes an object details page or an object submission page.

Optionally, the interaction page display module 1430 is further specifically configured to: display, through an account display control, an account name and/or review information corresponding to the second account when the interaction information is the account display control displayed in the second display area; and display, in the live streaming room page corresponding to the first account, the account information page corresponding to the account display control in response to the trigger operation for the account display control.

Optionally, the interaction page display module 1430 is further specifically configured to: display, by using an object display control, at least one of an object icon, an object name, an object attribute, and review information corresponding to the second account when the interaction information is the object display control displayed in the second display area; and display, in the live streaming room page corresponding to the first account, an object list page in the live streaming room corresponding to the second account in response to a trigger operation for the object display control.

The apparatus for displaying a live streaming page provided by an embodiment of the present disclosure may perform the method for displaying a live streaming page provided by any embodiment of the present disclosure, and has corresponding functional modules and beneficial effects to perform the method.

It should be noted that the units and modules included in the foregoing apparatus are only divided according to the function logic, but are not limited to the foregoing division, as long as the corresponding functions can be implemented. In addition, the specific names of the functional units are merely for ease of distinguishing, and are not intended to limit the protection scope of the embodiments of the present disclosure.

The embodiments of the present disclosure provide a method, an apparatus, a device and a storage medium for displaying a live streaming page. Through displaying interaction information corresponding to at least one second account in a live streaming room page corresponding to a first account, and displaying an interaction page corresponding to the interaction information in the live streaming room page corresponding to the first account in response to a trigger operation for the interaction information, displaying the interaction information corresponding to the second account in the live streaming room page corresponding to the first account is achieved, so that the interaction information corresponding to the second account may be operated in the live streaming room corresponding to the first account, and the effect similar to operating the interaction information directly in the live streaming room corresponding to the second account is generated. Thus, the user experience and satisfaction of viewers of the live streaming room corresponding to the first account are increased, the operation on the object in the live streaming room corresponding to the second account can be directly completed in the live streaming room corresponding to the first account, the path of the operation on the object is shortened, and the flow conversion efficiency is improved.

FIG. 15 is a structural schematic diagram of an electronic device according to an embodiment of the present disclosure. Referring to FIG. 15 below, a structural schematic diagram of an electronic device (e.g., the terminal device in FIG. 15) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (e.g., an in-vehicle navigation terminal), and a fixed terminal such as a digital TV, a desktop computer, or the like. The electronic device shown in FIG. 15 is merely an example, and should not impose any limitation on the functions and scope of use of the embodiments of the present disclosure.

As shown in FIG. 15, the electronic device 500 may include a processing device (e.g., a central processing unit, a graphics processor, or the like) 501, which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, or the like ; an output device 507 including, for example, a liquid crystal display (LCD), a speaker, a vibrator, or the like ; a storage device 508 including, for example, a magnetic tape, a hard disk, or the like ; and a communication device 509. The communication device 509 may allow the electronic device 500 to communicate wirelessly or wired with other devices to exchange data. While FIG. 15 shows the electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, an embodiment of the present disclosure includes a computer program product including a computer program carried on a non-transitory computer readable medium, the computer program including a program code for performing the method shown in the flowchart. In such embodiments, the computer program may be downloaded and installed from the network through the communication device 509, or installed from the storage device 508, or from the ROM 502. When the computer program is executed by the processing device 501, the foregoing functions defined in the method of the embodiments of the present disclosure are performed.

The names of messages or information exchanged between multiple devices in the embodiments of the present disclosure are for illustrative purposes only and are not intended to limit the scope of such messages or information.

The electronic device provided by the embodiments of the present disclosure and the method for displaying a live streaming page provided in the foregoing embodiments belong to the same inventive concept, and technical details not described in detail in this embodiment may refer to the foregoing embodiments, and this embodiment has the same beneficial effects as the foregoing embodiments.

An embodiment of the present disclosure provides a computer storage medium having a computer program stored thereon that, when executed by a processor, implements the method for displaying a live streaming page provided in the foregoing embodiments.

It should be noted that the computer-readable medium described above may be a computer readable signal medium, a computer readable storage medium, or any combination of both. The computer-readable storage medium may be, for example, but not limited to, an electrical, magnetic, optical, electromagnetic, infrared, or semiconductor system, apparatus or device, or any combination thereof. More specific examples of computer-readable storage media may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program that may be used by or in connection with an instruction execution system, apparatus, or device. In the present disclosure, a computer readable signal medium may include a data signal propagated in a baseband or as part of a carrier, where the computer readable program code is carried. Such propagated data signals may take a variety of forms including, but not limited to, electromagnetic signals, optical signals, or any suitable combination of the above. The computer readable signal medium may also be any computer readable medium other than the computer readable storage medium that may send, propagate, or transmit a program for use by or in connection with an instruction execution system, apparatus, or device. The program code included on the computer-readable medium may be transmitted by any suitable medium, including, but not limited to: wires, optical cables, RF (radio frequency), and the like, or any suitable combination of the above.

In some implementations, a client or a server may communicate using any currently known or future developed network protocol, such as HTTP (HyperText Transfer Protocol), and may be interconnected with any form or medium of digital data communication (e.g., a communication network). Examples of a communication network include a local area network ("LAN"), a wide area network ("WAN"), the internet work (e.g., the Internet), and a peer-to-peer network (e.g., an ad hoc peer-to-peer network), as well as any currently known or future developed networks.

The computer-readable medium described above may be included in the electronic device; or may separately exist without being assembled into the electronic device.

The computer readable medium carries one or more programs, and when the one or more programs are executed by the electronic device, the electronic device is caused to: display a live streaming room page corresponding to a first account, where a live streaming room page corresponding to the first account includes a live video stream corresponding to the first account and a live video stream corresponding to at least one second account, and a connection relationship is established between the first account and the at least one second account; display interaction information corresponding to the second account in the live streaming room page corresponding to the first account, where the interaction information corresponding to the second account represents an interaction behavior in a live streaming room corresponding to the second account; and display an interaction page corresponding to the interaction information in the live streaming room page corresponding to the first account in response to a trigger operation for the interaction information.

The computer program code for performing the operations of the present disclosure may be written in one or more programming languages, including, but not limited to, object oriented programming languages such as Java, Smalltalk, C++, and conventional procedural programming languages, such as the "C" language or similar programming languages. The program code may be executed entirely on a viewer computer, partly on the viewer computer, be executed as a stand-alone software package, partly on the viewer computer and partly on a remote computer, or entirely on a remote computer or a server. In a scenario involving a remote computer, the remote computer may be connected to the viewer computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the unit does not constitute a limitation on the unit itself in some cases.

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the above. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for displaying a live streaming page comprising:
displaying a live streaming room page corresponding to a first account, wherein the live streaming room page corresponding to the first account comprises a live video stream corresponding to the first account and a live video stream corresponding to at least one second account, and a connection relationship is established between the first account and the at least one second account;
displaying interaction information corresponding to the second account in the live streaming room page corresponding to the first account, wherein the interaction information corresponding to the second account represents an interaction behavior in a live streaming room corresponding to the second account;
displaying an interaction page corresponding to the interaction information in the live streaming room page corresponding to the first account in response to a trigger operation for the interaction information.

2. The method of claim 1, wherein displaying the live streaming room page corresponding to the first account comprises:
comprising a first display area and at least one second display area in the live streaming room page corresponding to the first account;
displaying the live video stream corresponding to the first account in the first display area, and displaying the live video stream corresponding to the at least one second account in the at least one second display area respectively.

3. The method of claim 2, wherein displaying the interaction information corresponding to the second account in the live streaming room page corresponding to the first account comprises:
displaying the interaction information corresponding to the at least one second account respectively in a display position in a respective second display area of the live streaming room page corresponding to the first account, wherein the display position is a background area in the second display area.

4. The method of claim 3, wherein displaying the interaction information corresponding to the at least one second account respectively in the display position in the respective second display area of the live streaming room page corresponding to the first account comprises:
for each second account, displaying, in accordance with a type of interaction information corresponding to the second account being displayed, the type of interaction information corresponding to the second account in the display position in the second display area of the live streaming room page corresponding to the first account.

5. The method of claim 3, wherein displaying the interaction information corresponding to the at least one second account respectively in the display position of the respective second display area of the live streaming room page corresponding to the first account comprises:
for each second account, determining, in accordance with the at least two types of interaction information corresponding to the second account being displayed, a display order according to types of at least two types of interaction information for the second account; and displaying, according to the display order, the at least two types of interaction information corresponding to the second account in the display position in the second display area of the live streaming room page corresponding to the first account.

6. The method of claim 2, wherein displaying the interaction page corresponding to the interaction information in the live streaming room page corresponding to the first account in response to the trigger operation for the interaction information comprises:
displaying, in accordance with the interaction information being a predetermined resource identifier displayed in the second display area, a resource acquisition page corresponding to the predetermined resource identifier in the live streaming room page corresponding to the first account in response to a trigger operation for the predetermined resource identifier.

7. The method of claim 6, wherein after displaying the resource acquisition page corresponding to the predetermined resource identifier in the live streaming room page corresponding to the first account, the method further comprises:
displaying, in a live streaming room page corresponding to the first account, an object list page in the live streaming room corresponding to the second account in response to a trigger operation for the resource acquisition page.

8. The method of claim 6, wherein displaying the predetermined resource identifier in the second display area comprises:
displaying a first form of the predetermined resource identifier in the second display area, and in accordance with the predetermined resource identifier satisfying a set condition, converting the first form into a second form, and displaying the second form of the predetermined resource identifier in the second display area;
wherein the first form and the second form are at least one element in a form set, the first form is different from the second form, and the form set comprises a resource icon and a resource attribute.

9. The method of claim 2, wherein displaying the interaction page corresponding to the interaction information in the live streaming room page corresponding to the first account in response to the trigger operation for the interaction information comprises:
displaying, through an object recommendation control displayed in the second display area, at least one of an object name, an object icon and object attribute information in accordance with the interaction information being the object recommendation control;
displaying, in the live streaming room page corresponding to the first account, an interaction page corresponding to the object recommendation control in response to a trigger operation for the object recommendation control, wherein the interaction page comprises an object details page or an object submission page;
and/or,
displaying, through an account display control displayed in the second display area, an account name and/or review information corresponding to the second account in accordance with the interaction information being the account display control;
displaying, in the live streaming room page corresponding to the first account, an account information page corresponding to the account display control in response to a trigger operation for the account display control;
and/or,
displaying, through the object display control displayed in the second display area, at least one of an object icon, an object name, an object attribute, and review information corresponding to the second account in accordance with the interaction information being the object display control;
displaying, in the live streaming room page corresponding to the first account, an object list page in the live streaming room corresponding to the second account in response to a trigger operation for the object display control.

10. An apparatus for displaying a live streaming page comprising:
a live streaming room page display module configured to display a live streaming room page corresponding to a first account, wherein the live streaming room page corresponding to the first account comprises a live video stream corresponding to the first account and a live video stream corresponding to at least one second account, and a connection relationship is established between the first account and the at least one second account;
an interaction information display module configured to display interaction information corresponding to the second account in the live streaming room page corresponding to the first account, wherein the interaction information corresponding to the second account represents an interaction behavior in a live streaming room corresponding to the second account;
an interaction page display module configured to display an interaction page corresponding to the interaction information in the live streaming room page corresponding to the first account in response to a trigger operation for the interaction information.

11. An electronic device comprising:
one or more processors;
a memory for storing one or more programs;
wherein when the one or more programs are executed by the one or more processors, the one or more processors implement the method for displaying a live streaming page of any of claims 1 to 9.

12. A storage medium comprising computer-executable instructions, wherein the computer-executable instructions, when executed by a computer processor, execute the method for displaying a live streaming page of any of claims 1 to 9.
